# EUROPEAN PATENT APPLICATION

(11) **EP 4 167 331 A1**
(43) Date of publication of application: **19.04.2023**
(21) Application number: 21826343.2
(22) Date of filing: 10.06.2021
(51) Int. Cl.: H01M 10/04, B26D 7/08

(54) **SECONDARY BATTERY MANUFACTURING EQUIPMENT AND MANUFACTURING METHOD THEREOF**

(30) Priority: 15.06.2020 KR 20200072598; 02.06.2021 KR 20210071811
(71) Applicant: LG Energy Solution, Ltd., Seoul 07335 (KR)
(72) Inventor: BAE, Sang Ho, Daejeon 34122 (KR); CHUNG, Joo Young, Daejeon 34122 (KR); KIM, Tae Jong, Daejeon 34122 (KR); LEE, Sang Woo, Daejeon 34122 (KR); JUNG, Su Taek, Daejeon 34122 (KR); HWANG, Won Pill, Daejeon 34122 (KR); CHOI, Min Cheol, Daejeon 34122 (KR); KIM, Jin Gon, Daejeon 34122 (KR); LEE, Yong Jun, Daejeon 34122 (KR)
(74) Representative: Goddar, Heinz J.
(86) International application number: PCT/KR2021/007286
(87) International publication number: WO 2021/256778

(57) **Abstract**

The present invention relates to a facility for manufacturing a secondary battery comprising: a separation sheet supply device configured to supply two separation sheets to be disposed vertically; an electrode supply device configured to supply electrodes to be disposed between the two separation sheets and on a top surface of the separation sheet, which is disposed at an upper side; a lamination device configured to bond the two separation sheets and the electrodes to each other; and an ultrasonic cutting device configured to bond surfaces of the two separation sheets to each other and simultaneously cut a bonding surface of the two separation sheets, wherein the ultrasonic cutting device comprises: an ultrasonic vibration part configured to generate ultrasonic vibration on surfaces of the two separation sheets disposed between the electrodes and bond the surfaces of the two separation sheets through thermal energy generated during the vibration; and a cutting part configured to cut a bonding surface of the two separation sheets, which are bonded to each other by the ultrasonic vibration part.

## Description

### TECHNICAL FIELD

### CROSS-REFERENCE TO RELATED APPLICATION

The present application claims the benefit of the priority of Korean Patent Application Nos. 10-2020-0072598, filed on June 15, 2020, and 10-2021-0071811, filed on June 02, 2021, which are hereby incorporated by reference in their entirety.

### TECHNICAL FIELD

The present invention relates to a facility for manufacturing a secondary battery, which is capable of bonding a plurality of separators and simultaneously cutting a bonding surface through ultrasonic vibration, and a method for manufacturing the same.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary battery is classified into a can-type secondary battery, in which an electrode assembly is embedded in a metal can, and a pouch-type secondary battery, in which an electrode assembly is embedded in a pouch. The pouch-type secondary battery comprises an electrode assembly, in which electrodes and a separator are alternately stacked, a pouch, which accommodates the electrode assembly, and an electrode lead coupled to an electrode tab provided in the electrode assembly. Here, the electrode tab and the electrode lead are coupled to each other through welding.

The electrode assembly comprises at least one radical unit, and the radical unit has a structure in which a plurality of electrodes and a plurality of separators are alternately stacked. A method for manufacturing the electrode assembly having such a structure comprises a lamination & stack manufacturing process, in which each of an electrode and a separator is cut, and the cut electrodes and separators are bonded to each other, or a stack & folding process.

However, in the above-described method for manufacturing the electrode assembly, the plurality of separators are cut at the same time. Here, it is difficult to uniformly cut the plurality of separators, and in particular, there is a problem that, when each of the separator is cut, an end of the separator is folded to cause product defects or short circuit.

### DISCLOSURE OF THE INVENTION

### TECHNICAL PROBLEM

The present invention has been invented to solve the above problems, and an object of the present invention is to provide a facility for manufacturing a secondary battery, which is capable of bonding a plurality of separators comprised in a radical unit and simultaneously cutting a bonding surface to uniformly cut the plurality of separators and prevent the bonding surface of the each of the plurality of separators from being folded, thereby reducing frequency of occurrence of product defects and short circuit and improving process simplification, and a method for manufacturing the same.

### TECHNICAL SOLUTION

A facility for manufacturing a secondary battery according to the present invention for achieving the above objects comprises: a separation sheet supply device configured to supply two separation sheets to be disposed vertically; an electrode supply device configured to supply electrodes to be disposed between the two separation sheets and on a top surface of the separation sheet, which is disposed at an upper side; a lamination device configured to bond the two separation sheets and the electrodes to each other; and an ultrasonic cutting device configured to bond surfaces of the two separation sheets to each other and simultaneously cut a bonding surface of the two separation sheets, wherein the ultrasonic cutting device comprises: an ultrasonic vibration part configured to generate ultrasonic vibration on surfaces of the two separation sheets disposed between the electrodes and bond the surfaces of the two separation sheets through thermal energy generated during the vibration; and a cutting part configured to cut a bonding surface of the two separation sheets, which are bonded to each other by the ultrasonic vibration part.

The ultrasonic vibration part may be provided above the two separation sheets, generate ultrasonic vibration in a state in which the two separation sheets disposed between the electrodes are pressed to be in close contact with each other, and have an ultrasonic bonding surface that bonds surfaces of the two separation sheets to each other through thermal energy, and the cutting part may be provided under the two separation sheets, press the bonding surface of the two separation sheets to compress the bonding surface of the two separation sheets together with the ultrasonic vibration part, and have a cutting surface configured to cut the bonding surface of the two separation sheets through frictional force due to the vibration of the ultrasonic generation part.

The ultrasonic vibration part may be provided above the two separation sheets, generate ultrasonic vibration in a state in which the two separation sheets disposed between the electrodes are pressed to be in close contact with each other, and have an ultrasonic bonding surface that bonds surfaces of the two separation sheets to each other through thermal energy.

The cutting part may be provided under the two separation sheets and comprise a circular blade configured to cut the bonding surface of the two separation sheets while moving from one side to the other side in a width direction of the two separation sheets.

The ultrasonic vibration part may be provided to be movable from an upper side of the two separation sheets toward the separation sheets, generate the ultrasonic vibration on the two separation sheets, and bond the surfaces of the two separation sheets to each other through the thermal energy generated during the vibration, and the cutting part may be provided at an end of the ultrasonic vibration part and transmit the ultrasonic vibration of the ultrasonic vibration part to the surfaces of the two separation sheets and simultaneously cut the bonding surface of the two separation sheets boned to each other by the ultrasonic vibration part.

The ultrasonic vibration part may comprise an ultrasonic wave generation member configured to generate the ultrasonic vibration and an ultrasonic boding member coupled to the ultrasonic wave generation member, disposed to be supported on the upper separation sheet of the two separation sheets, and having an ultrasonic bonding surface configured to vibrate and bond the surfaces of the separation sheets through the ultrasonic vibration transmitted from the ultrasonic wave generation part, wherein the ultrasonic bonding member may be detachably coupled to the ultrasonic wave generation member.

The boding surface of the ultrasonic bonding member supported on the separation sheets may have a shape corresponds to an edge surface of each of the electrodes facing the surfaces of the separation sheets.

The cutting part may have a shape corresponding to the bonding surface of the ultrasonic bonding member supported on the separation sheets.

The cutting part may be detachably coupled to the ultrasonic vibration part.

A method for manufacturing a secondary battery according to the present invention comprises a separation sheet supply step of supplying two separation sheet to be disposed vertically; an electrode supply step of supplying electrodes to be disposed between the two separation sheets and on a top surface of the separation sheet, which is disposed at the uppermost end; a lamination step of bonding the two separation sheets and the electrodes to each other; and a cutting and bonding step of cutting and bonding surface of the two separation sheets at the same time through an ultrasonic cutting device, wherein the cutting and bonding step comprises: a bonding process of generating ultrasonic vibration on the surfaces of the two separation sheets disposed between the electrodes through an ultrasonic vibration part of the ultrasonic cutting device to bond the surfaces of the two separation sheets through thermal energy generated during the vibration; and a cutting process of cutting the bonding surface of the two separation sheets through a cutting part of the ultrasonic cutting device.

In the bonding process, the two separation sheets disposed between the electrodes may be pressed to be in close contact with each other through the ultrasonic vibration part provided above the two separation sheets, and then, the ultrasonic vibration may be generated to bond the surfaces of the two separation sheets through the thermal energy generated during the vibration, and in the cutting process, the bonding surface of the two separation sheets may be pressed through a cutting part provided under the two separation sheets to compress the bonding surface of the two separation sheets together with the ultrasonic vibration part and cut the bonding surface of the two separation sheets through frictional force due to the vibration of the ultrasonic generation part.

In the bonding process, the ultrasonic vibration part may comprise a plurality of ultrasonic bonding members having different shapes, and the ultrasonic bonding member corresponding to an edge of the electrode among the plurality of ultrasonic bonding members may be detachably coupled to the ultrasonic wave generation member.

In the cutting process, the cutting part may have a shape corresponding to the ultrasonic bonding member.

### ADVANTAGEOUS EFFECTS

The facility for manufacturing the secondary battery according to the present invention may comprise the separation sheet supply device, the electrode supply device, the lamination device, and the ultrasonic cutting device, and the ultrasonic cutting device may comprise the ultrasonic vibration part bonding the surfaces of the two separation sheets to each other and the cutting part cutting the center of the bonding surface of the two separation sheets. Therefore, the separation sheet may be uniformly cut, the bonding force of the separation sheet may increase to prevent the separation sheet from being folded, and the process may be simplified. Particularly, the ultrasonic vibration device may be used to prevent the burr from being generated on the cut surface of the separation sheet, thereby improving the marketability of the electrode assembly.

In addition, in the facility for manufacturing the secondary battery according to the present invention, the bonding surface of the ultrasonic bonding member may have the shape corresponding to the edge surface of the electrode, which faces the surface of the separation sheet. Due to these characteristics, the surface of the separation sheet may be bonded to correspond to the edge surface of the electrode.

### BRIEF DESCRIPTION OF THE DRAWINGS

FIG. 1 is a process view illustrating a facility for manufacturing a secondary battery according to a first embodiment of the present invention.
FIG. 2 is a side view illustrating an ultrasonic cutting device of the facility for manufacturing the secondary battery according to the first embodiment of the present invention.
FIG. 3 is a bottom perspective view illustrating an ultrasonic cutting device of the facility for manufacturing the secondary battery according to the first embodiment of the present invention.
FIG. 4 is a cross-sectional view of FIG. 3.
FIG. 5 is a bottom view illustrating an ultrasonic vibration part comprised in the ultrasonic cutting device of the facility for manufacturing the secondary battery according to the first embodiment of the present invention.
FIG. 6 is a plan view illustrating a cutting part comprised in the ultrasonic cutting device of the facility for manufacturing the secondary battery according to the first embodiment of the present invention.
FIG. 7 is a plan view illustrating the secondary battery manufactured by the facility for manufacturing the secondary battery according to the first embodiment of the present invention.
FIG. 8 is a flowchart illustrating a method for manufacturing the second battery according to the first embodiment of the present invention.
FIG. 9 is a perspective view illustrating an ultrasonic cutting device of a facility for manufacturing a secondary battery according to a second embodiment of the present invention.
FIG. 10 is a side view illustrating an ultrasonic cutting device of a facility for manufacturing a secondary battery according to a third embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

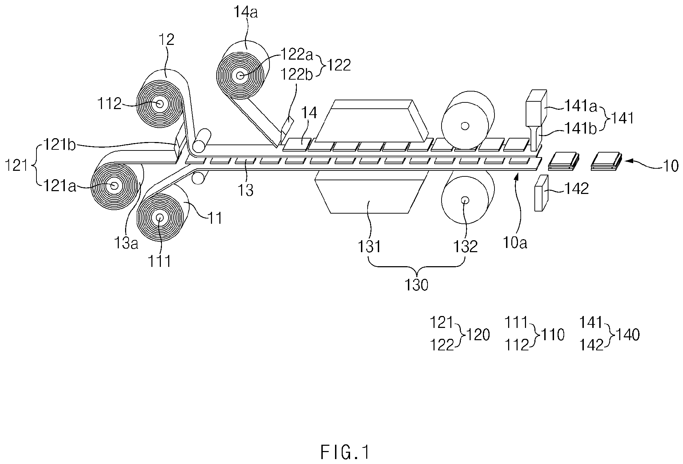

A secondary battery according to a first embodiment of the present invention comprises an electrode assembly and a pouch accommodating the electrode assembly. Referring to FIG. 1, the electrode assembly comprises one or more radical units 10, and the radical unit 10 has a structure in which a plurality of electrodes and a plurality of separators are alternately stacked. In addition, the plurality of electrodes may comprise a first electrode and a second electrode, and the first electrode may be a positive electrode, and the second electrode may be a negative electrode, and, of course, vice and versa.

Here, the radical unit 10 is manufactured using a facility 100 for manufacturing the secondary battery according to the first embodiment of the present invention. The facility 100 for manufacturing the secondary battery according to the first embodiment of the present invention performs a process in which, when the radical unit 10 is manufactured, ultrasonic vibration is applied to bond a plurality of separation sheets to each other, and simultaneously, cut bonding surface of the plurality of separation sheets.

Hereinafter, the facility 100 for manufacturing the secondary battery according to the first embodiment of the present invention will be described in detail with reference to the accompanying drawings.

### [Facility for manufacturing secondary battery according to first embodiment of the present invention]

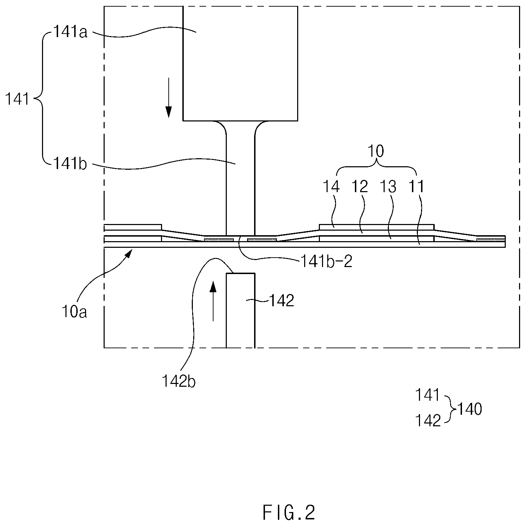

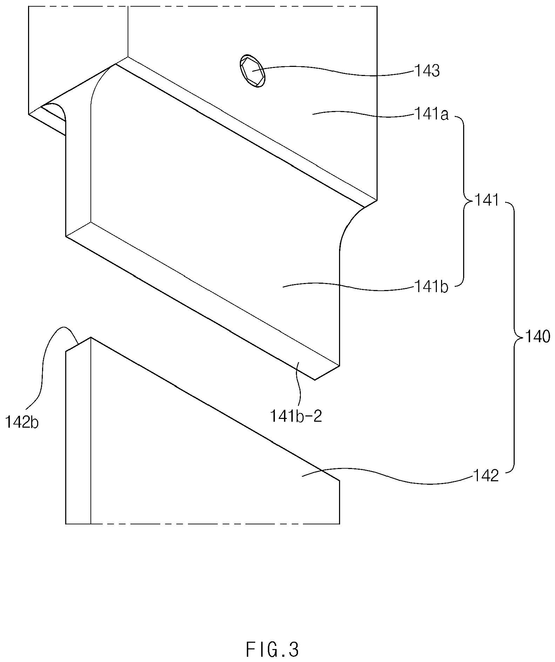

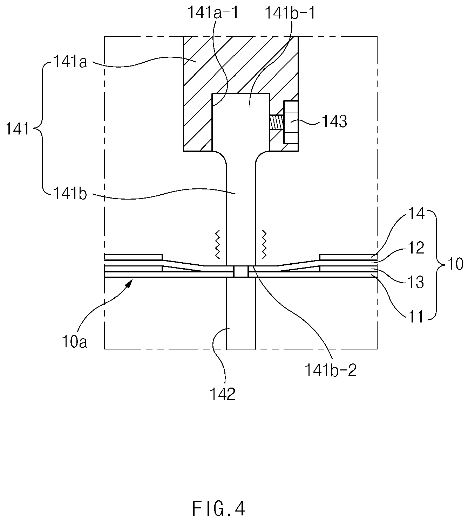

The facility 100 for the secondary battery according to the first embodiment of the present invention is, as illustrated in FIGS. 1 to 7, comprises a separation sheet supply device 110, an electrode supply device 120, a lamination device 130, and an ultrasonic cutting device 140.

### Separation sheet supply device

The separation sheet supply device 110 is provided to supply two separation sheets so as to be arranged vertically, and comprises a first separation sheet supply roller 111 supplying one separation sheet 11 and a second separation sheet supply roller 112 supplying the other separation sheet 12 on a top surface of the one separation sheet 11 supplied from the first separation sheet supply roller 111.

Hereinafter, the separation sheet 11 disposed at a lower side is referred to as the first separation sheet 11, and the separation sheet 12 disposed at an upper side is referred to as the second separation sheet 12.

### Electrode supply device

The electrode supply device 120 is provided to supply electrodes so as to be disposed between the two separation sheets and on the top surface of the separation sheet disposed at the upper side, and comprises a first electrode supply part 121 supplying a first electrode 13 between the two separation sheets 11 and 12 and a second electrode supply part 122 supplying a second electrode 14 to be disposed on a top surface of the second separation sheet 12.

The first electrode supply part 121 comprises a first electrode supply roller 121a supplying a first electrode sheet 13a and a first electrode cutter 121b cutting the first electrode sheet 13a supplied from the first electrode supply roller 121a to manufacture a first electrode 13 and then disposing the first electrode 13 between the two separations sheets 11 and 12.

The second electrode supply part 122 comprises a second electrode supply roller 122a supplying a second electrode sheet 14a and a second electrode cutter 122b applying the second electrode sheet 14a supplied from the second electrode supply roller 122a to manufacture a second electrode 14 and then disposing the second electrode 14 on a top surface of the second separation sheet 12, which corresponds to the first electrode 13.

### Lamination device

The lamination device 130 is provided bond the two separation sheets and the electrodes, which are disposed vertically, and comprises a heater 131 heating an unfinished radical unit comprising the second electrode 14, the second separation sheet 12, the first electrode 13 and the first separation sheet 11 and a rolling roller 132 rolling and bonding the unfinished radical unit passing through the heater 131.

### Ultrasonic cutting device

The ultrasonic cutting device 140 is provided to manufacture bonds the separation sheet between the electrodes and simultaneously cuts a center of the separation sheet to manufacture a finished radical unit 10 and comprises an ultrasonic vibration part 141 and a cutting part 142.

The ultrasonic vibration part 141 is provided to bond surfaces of the two separation sheets by using ultrasonic vibration and generates the ultrasonic vibration on the surfaces of the two separation sheets 11 and 12 comprised in the radical unit 10 to bond the two separation sheets 11 and 12 through thermal energy generated due to the vibration.

That is, the ultrasonic vibration part 141 is provided on an upper portion of the two separation sheets 11 and 12 disposed between the electrodes disposed in a longitudinal direction of the separation sheet, and presses the second separation sheet 12 to generate the ultrasonic vibration in a state in which the two separation sheets 11 and 12 are in close contact with each other, thereby bonding the two separation sheets 11 and 12 through the thermal energy generated during the vibration.

For example, the ultrasonic vibration part 141 comprises an ultrasonic wave generation member 141a generating ultrasonic vibration and an ultrasonic boding member 141b coupled to the ultrasonic wave generation member 141a to press the upper separation sheets 12 of the two separation sheets so that the two separation sheets 11 and 12 are in close contact with each other and vibrating the surfaces of the separation sheets 11 and 12 to bond the surfaces to each other through the ultrasonic vibration transmitted from the ultrasonic wave generation member 141a.

The ultrasonic wave vibration part 141 having such a structure presses the second separation sheet 12 through the ultrasonic bonding member 141b so that the first and second separation sheets 11 and 12 are in close contact with each other, and then generates the ultrasonic vibration through the ultrasonic wave generation member 141a. As a result, the ultrasonic vibration of the ultrasonic wave generation member 141a is transmitted to the first and second separation sheets 11 and 12 through the ultrasonic bonding member 141b, and the thermal energy is generated on the surfaces of the separation sheets 11 and 12 by the ultrasonic vibration to melt the surfaces of the separation sheets 11 and 12. At this time, when the ultrasonic wave generation member 141a is stopped, the ultrasonic vibration transmitted to the surfaces of the separation sheet 11 and 12 is removed, and thus, the melted portions of the separation sheets 11 and 12 are solidified to bond the surfaces of the first and second separation sheets to each other.

Here, the ultrasonic bonding member 141b may be formed to have a length less than each of the separation sheets 11 and 12 in a width direction of the separation sheets 11 and 12, and thus, even if a position error between the ultrasonic bonding member 141b and the separation sheets 11 and 12 occurs, a portion of the ultrasonic bonding member 141b may be prevented from being disposed outside the separation sheets 11 and 12.

The ultrasonic bonding member 141b may be detachably coupled to the ultrasonic wave generation member 141a. That is, a coupling groove 141a-1 is formed in a bottom surface of the ultrasonic wave generation member 141a, and a coupling protrusion 141b-1 coupled to the coupling groove 141a-1 is formed on the ultrasonic bonding member 141b. The ultrasonic bonding member 141b is detachably coupled to the ultrasonic wave generation member 141a through the coupling groove 141a-1 and the coupling protrusion 141b-1.

In particular, a coupling bolt 143 for improving fixing force of the coupling protrusion 141b-1 coupled to the coupling groove 141a-1 may be further provided. The coupling bolt 143 presses the coupling protrusion 141b-1 after passing through the ultrasonic wave generation member 141a to improve fixing force between the coupling groove 141a-1 and the coupling protrusion 141b-1. As a result, it is possible to prevent the ultrasonic bonding member 141b coupled to the ultrasonic wave generation member 141a from being separated.

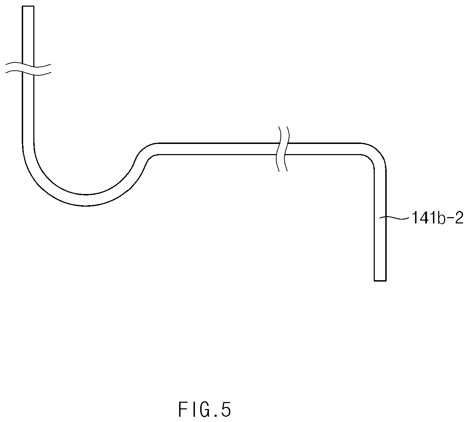

Referring to FIG. 5, an ultrasonic bonding surface 141b-2 of the ultrasonic bonding member 141b supported on the second separation sheet 12 has a shape corresponding to an edge surface of the electrode, which faces the surface of the second separation sheet 12. That is, when the edge surface of the electrode is formed in a straight or curved shape, the ultrasonic bonding surface 141b-2 of the ultrasonic bonding member 141b is also formed in a straight or curved shape.

At this time, the ultrasonic vibration part 141 may replace the ultrasonic bonding member 141b having the ultrasonic bonding surface 141b-2 having the shape corresponding to the edge surface of the electrode with the ultrasound generation member 141a to provide convenience and compatibility of use.

The cutting part 142 is provided to cut the surfaces of the two separation sheets bonded by the ultrasonic vibration part and is disposed under the two separation sheets disposed between the electrodes to press the first separation sheet 11, thereby compressing the bonding surface of the two separation sheets together with the ultrasonic vibration part 141 and also cutting the bonding surface of the two separation sheets through frictional force generated by the vibration of the ultrasonic vibration part 141.

That is, when the cutting part 142 compresses the bonding surface of the two separation sheets together with the ultrasonic vibration part 141, rubbing occurs on the bonding surface of the two separation sheets by the vibration of the ultrasonic vibration part 141, and as a result, the bonding surface of the two separation sheets may be cut.

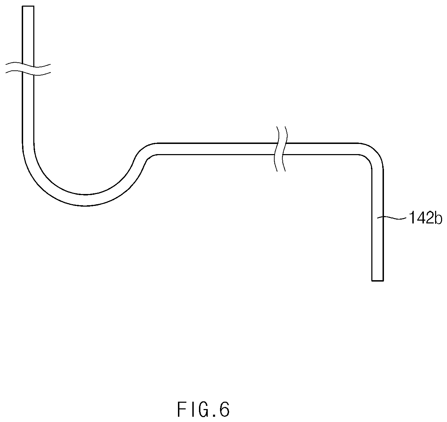

Here, referring to FIG. 6, the cutting surface 142b of the cutting part 142 has a shape corresponding to the bonding surface of the ultrasonic bonding member supported on the separation sheets 11 and 12. Thus, the bonding surface of the separation sheet 12 may be cut along the edge surfaces of the electrodes 13 and 14.

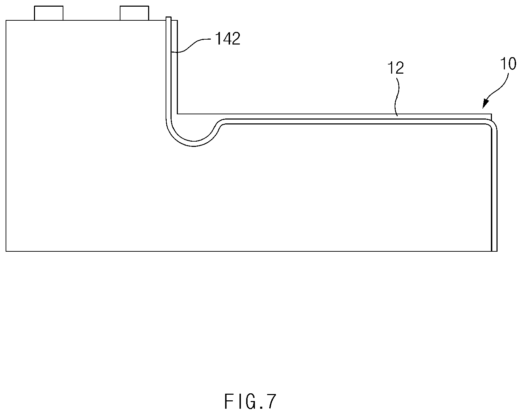

That is, as illustrated in FIG. 7, the facility 100 for manufacturing the secondary battery according to the first embodiment of the present invention may cut the separation sheet along the edge surfaces of the electrodes 13 and 14.

Therefore, the facility 100 for manufacturing the secondary battery according to the first embodiment of the present invention is characterized by comprising the ultrasonic vibration device, and due to such a characteristic, the two separation sheets provided in the unfinished radical unit 10a may be bonded to each other, and simultaneously, be cut to manufacture the finished product radical unit 10. Particularly, the separation sheet may be uniformly cut, and the cutting surface of the separation sheet may be prevented from being folded to prevent defects and short circuit from occurring.

Hereinafter, a method for manufacturing a secondary battery using the facility for manufacturing the secondary battery according to the first embodiment of the present invention will be described.

### [Method for manufacturing secondary battery according to first embodiment of the present invention]

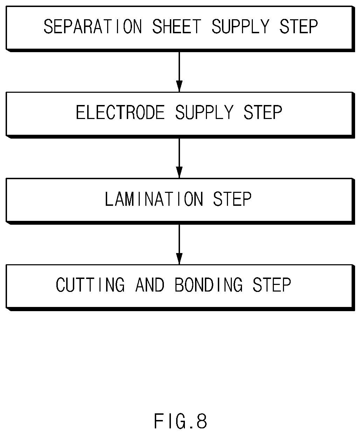

As illustrated in FIG. 8, a method for manufacturing the secondary battery according to the first embodiment of the present invention comprises a separation sheet supply step, an electrode supply step, a lamination step, and a cutting and bonding step.

### Separation sheet supply step

In the separation sheet supply step, first and second separation sheets 11 and 12, which are two separation sheets, are supplied to be disposed vertically through a separation sheet supply device 110.

### Electrode supply step

In the electrode supply step, electrodes 13 and 14 are respectively disposed on between the first and second separation sheets 11 and 12 and on a top surface of the second separation sheet 12, which are disposed at an upper side, through an electrode supply device 120. That is, in the electrode supply step, the first electrode 13 is supplied between the first and second separation sheets 11 and 12, and the second electrode 14 is supplied on the top surface of the second separation sheet 12, which corresponds to the first electrode 13.

As a result, an unfinished radical unit, in which the second electrode 14, the second separation sheet 12, the first electrode 13, and the first separation sheet 11 are arranged in a direction from the uppermost end to the lowermost end.

### Lamination step

The lamination step is performed to bond the electrode and the separation sheet, which are comprised in the unfinished radical unit. In the lamination step, the unfinished radical unit is heated through a heater 131 and then rolled through a rolling roller 132 to bond the electrode and the separation sheet comprised in the unfinished radical unit.

### Cutting and bonding step

The cutting and bonding step is performed to bond and cut the separation sheets 11 and 12 disposed between the electrodes in the unfinished radical unit. In the cutting and boding step, the surfaces of the two separation sheets are bonded and cut at the same time through the ultrasonic cutting device 140.

The ultrasonic cutting device 140 comprises an ultrasonic vibration part 141 and a cutting part 142, and the ultrasonic vibration part 141 comprises an ultrasonic wave generation member 141a and an ultrasonic bonding member 141b.

That is, the cutting and bonding step comprises a bonding process of bonding the surfaces of the two separation sheets through the ultrasonic vibration part 141 and a cutting process of cutting the bonding surface of the two separation sheets through the cutting part 142 to manufacture a finished product radical unit 10.

In the bonding process, the first and second separation sheets 11 and 12 are in close contact with each other by pressing a top surface of the second separation sheet 12. When the ultrasonic wave generation member 141a is driven to generate ultrasonic vibration in the above-described state, the ultrasonic vibration generated by the ultrasonic wave generation member 141a is transmitted to the surfaces of the separation sheets through the ultrasonic bonding member 141b to melt the surfaces of the separation sheets through thermal energy due to the ultrasonic vibration transmitted to the separation sheets. Thereafter, the first and second separation sheets 11 and 12 may be bonded to each other while the melted surfaces of the separation sheets are solidified by stopping the operation of the ultrasonic wave generation member 141a.

In the bonding process, the ultrasonic vibration part comprises a plurality of ultrasonic bonding members having different shapes, and the ultrasonic bonding member corresponding to an edge of the electrode among the plurality of ultrasonic bonding members is detachably coupled to the ultrasonic wave generation member.

In the cutting process, the bonding surface of the two separation sheets 11 and 12 is pressed through the cutting part 142 disposed under the first separation sheet 11 to compress the bonding surface of the two separation sheets together with the ultrasonic vibration part 141. Then, slim occurs on the bonding surface of the two separation sheets 11 and 12 by the ultrasonic vibration part 141, and thus, the bonding surface of the two separation sheets 11 and 12 is cut. As a result, the radical unit 10, in which the second separator, the second electrode, the first separator, and the first electrode are stacked, may be manufactured.

In the cutting process, a plurality of cutting parts 142 having different shapes are provided, and the cutting part corresponding to the ultrasonic bonding member among the plurality of cutting parts is mounted to be used. That is, the cutting part has a shape corresponding to the ultrasonic bonding member.

Thus, in the method for manufacturing the secondary battery according to the first embodiment of the present invention, as illustrated in FIG. 7, the finished radical unit 10, in which both ends of the separator facing the transport direction of the radical unit are bonded to each other may be manufactured.

Hereinafter, in descriptions of another embodiment of the present invention, constituents having the same function as the above-mentioned embodiment have been given the same reference numeral in the drawings, and thus duplicated description will be omitted.

### [Facility for manufacturing secondary battery according to second embodiment of the present invention]

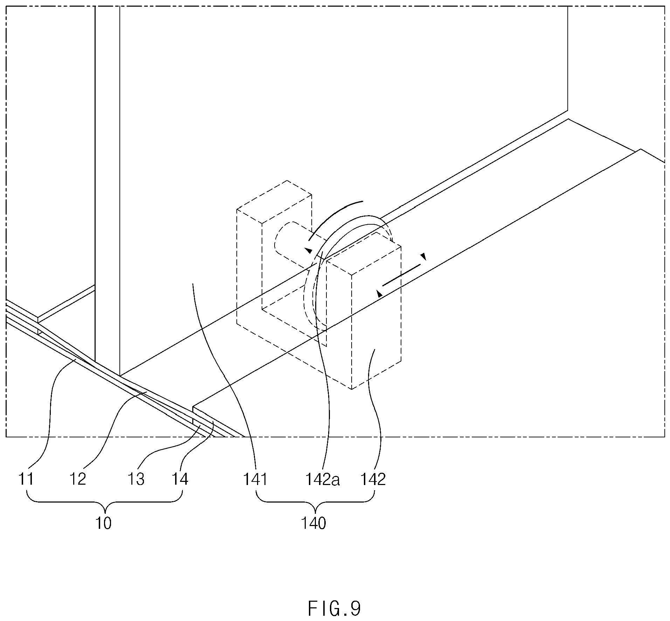

As illustrated in FIG. 9, an ultrasonic cutting device 140 of a facility 140 for manufacturing a secondary battery according to a second embodiment of the present invention comprises an ultrasonic vibration part 141 and a cutting part 142.

The ultrasonic vibration part 141 is provided above two separation sheets 11 and 12, generates ultrasonic vibration in a state in which the two separation sheets 11 and 12 disposed between electrodes are pressed to be in close contact with each other, and has an ultrasonic bonding surface that bonds surfaces of the two separation sheets 11 and 12 to each other through thermal energy.

The cutting part 142 is provided under the two separation sheets 11 and 12 and comprises a circular blade 142a which cuts a bonding surface of two separation sheets 11 and 12 while moving from one side to the other side in a width direction of the two separation sheets 11 and 12.

Therefore, in the facility 100 for manufacturing the secondary battery according to the second embodiment of the present invention, the bonding surface of the two separation sheets 11 and 12 may be cut through the cutting part 142 comprising the rotating circular blade 142a. Thus, the bonding surface of the two separation sheets 11 and 12 may be more easily cut, and in particular, the bonding surface of the two separation sheets 11 and 12 may be cut to have a uniform cut surface.

### [Facility for manufacturing secondary battery according to third embodiment of the present invention]

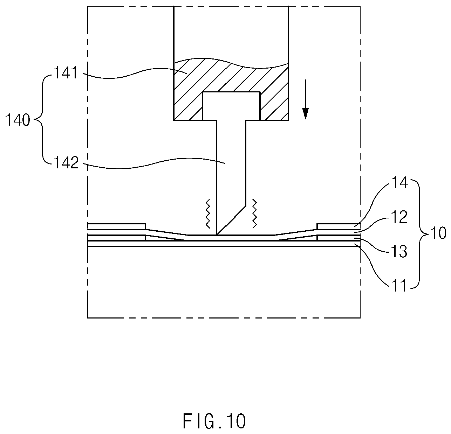

As illustrated in FIG. 10, an ultrasonic cutting device 140 of the facility 100 for manufacturing the secondary battery according to a third embodiment of the present invention comprises an ultrasonic vibration part 141 and a cutting part 142.

The ultrasonic vibration part 141 is provided above the two separation sheets 11 and 12, moves toward an upper side of the two separation sheets 11 and 12, and generates ultrasonic vibration on the two separation sheets to bond surfaces of the two separation sheets 11 and 12 through thermal energy generated during the vibration.

The cutting part 142 is provided at an end of the ultrasonic vibration part 141 and transmits the ultrasonic vibration of the ultrasonic vibration part 141 to the surfaces of the two separation sheets 11 and 12 and simultaneously cut a bonding surface of the two separation sheets 11 and 12, which are bonded to each other by the ultrasonic vibration part 141.

Therefore, the facility 100 for manufacturing the secondary battery according to the third embodiment of the present invention comprises the ultrasonic cutting device 140 in which the ultrasonic vibration part 141 and the cutting part 142 are integrally coupled to each other to bond and cut the surfaces of two separation sheets 11 and 12 at the same time.

The cutting part 142 may be detachably coupled to the end of the ultrasonic vibration part 141. That is, the ultrasonic vibration part 141 has a coupling groove formed in the end thereof in a longitudinal direction, and the cutting part 142 has a coupling protrusion fitted into and coupled to the coupling groove. Therefore, the cutting part 142 and the ultrasonic vibration part 141 may be easily attached and detached.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

## Claims

1. A facility for manufacturing a secondary battery, the facility comprising:
a separation sheet supply device configured to supply two separation sheets to be disposed vertically;
an electrode supply device configured to supply electrodes to be disposed between the two separation sheets and on a top surface of the separation sheet, which is disposed at an upper side;
a lamination device configured to bond the two separation sheets and the electrodes to each other; and
an ultrasonic cutting device configured to bond surfaces of the two separation sheets to each other and simultaneously cut a bonding surface of the two separation sheets,
wherein the ultrasonic cutting device comprises:
an ultrasonic vibration part configured to generate ultrasonic vibration on surfaces of the two separation sheets disposed between the electrodes and bond the surfaces of the two separation sheets through thermal energy generated during the vibration; and
a cutting part configured to cut a bonding surface of the two separation sheets, which are bonded to each other by the ultrasonic vibration part.

2. The facility of claim 1, wherein the ultrasonic vibration part is provided above the two separation sheets, generates ultrasonic vibration in a state in which the two separation sheets disposed between the electrodes are pressed to be in close contact with each other, and has an ultrasonic bonding surface that bonds surfaces of the two separation sheets to each other through thermal energy, and
the cutting part is provided under the two separation sheets, presses the bonding surface of the two separation sheets to compress the bonding surface of the two separation sheets together with the ultrasonic vibration part, and has a cutting surface configured to cut the bonding surface of the two separation sheets through frictional force due to the vibration of the ultrasonic generation part.

3. The facility of claim 1, wherein the ultrasonic vibration part is provided above the two separation sheets, generates ultrasonic vibration in a state in which the two separation sheets disposed between the electrodes are pressed to be in close contact with each other, and has an ultrasonic bonding surface that bonds surfaces of the two separation sheets to each other through thermal energy, and
the cutting part is provided under the two separation sheets and comprises a circular blade configured to cut the bonding surface of the two separation sheets while moving from one side to the other side in a width direction of the two separation sheets.

4. The facility of claim 1, wherein the ultrasonic vibration part is provided to be movable from an upper side of the two separation sheets toward the separation sheets, generates the ultrasonic vibration on the two separation sheets, and bonds the surfaces of the two separation sheets to each other through the thermal energy generated during the vibration, and
the cutting part is provided at an end of the ultrasonic vibration part and transmits the ultrasonic vibration of the ultrasonic vibration part to the surfaces of the two separation sheets and simultaneously cuts the bonding surface of the two separation sheets boned to each other by the ultrasonic vibration part.

5. The facility of claim 2 or 3, wherein the ultrasonic vibration part comprises an ultrasonic wave generation member configured to generate the ultrasonic vibration and an ultrasonic boding member coupled to the ultrasonic wave generation member, disposed to be supported on the upper separation sheet of the two separation sheets, and having an ultrasonic bonding surface configured to vibrate and bond the surfaces of the separation sheets through the ultrasonic vibration transmitted from the ultrasonic wave generation part,
wherein the ultrasonic bonding member is detachably coupled to the ultrasonic wave generation member.

6. The facility of claim 5, wherein the boding surface of the ultrasonic bonding member supported on the separation sheets has a shape corresponds to an edge surface of each of the electrodes facing the surfaces of the separation sheets.

7. The facility of claim 6 wherein the cutting part has a shape corresponding to the bonding surface of the ultrasonic bonding member supported on the separation sheets.

8. The facility of claim 6, wherein the cutting part is detachably coupled to the ultrasonic vibration part.

9. A method for manufacturing a secondary battery, the method comparing
a separation sheet supply step of supplying two separation sheet to be disposed vertically;
an electrode supply step of supplying electrodes to be disposed between the two separation sheets and on a top surface of the separation sheet, which is disposed at the uppermost end;
a lamination step of bonding the two separation sheets and the electrodes to each other; and
a cutting and bonding step of cutting and bonding surface of the two separation sheets at the same time through an ultrasonic cutting device,
wherein the cutting and bonding step comprises:
a bonding process of generating ultrasonic vibration on the surfaces of the two separation sheets disposed between the electrodes through an ultrasonic vibration part of the ultrasonic cutting device to bond the surfaces of the two separation sheets through thermal energy generated during the vibration; and
a cutting process of cutting the bonding surface of the two separation sheets through a cutting part of the ultrasonic cutting device.

10. The method of claim 9, wherein, in the bonding process, the two separation sheets disposed between the electrodes are pressed to be in close contact with each other through the ultrasonic vibration part provided above the two separation sheets, and then, the ultrasonic vibration is generated to bond the surfaces of the two separation sheets through the thermal energy generated during the vibration, and
in the cutting process, the bonding surface of the two separation sheets is pressed through a cutting part provided under the two separation sheets to compress the bonding surface of the two separation sheets together with the ultrasonic vibration part and cut the bonding surface of the two separation sheets through frictional force due to the vibration of the ultrasonic generation part.

11. The method of claim 10, wherein, in the bonding process, the ultrasonic vibration part comprises a plurality of ultrasonic bonding members having different shapes, and
the ultrasonic bonding member corresponding to an edge of the electrode among the plurality of ultrasonic bonding members is detachably coupled to the ultrasonic wave generation member.

12. The method of claim 11, wherein, in the cutting process, the cutting part has a shape corresponding to the ultrasonic bonding member.
